# EUROPÄISCHE PATENTSCHRIFT

(11) **EP 1 055 568 B1**
(45) Veröffentlichungstag und Bekanntmachung des Hinweises auf die Patenterteilung: **21.06.2006**
(21) Anmeldenummer: 00110246.6
(22) Anmeldetag: 19.05.2000
(51) Int. Cl.: B60R 22/34

(54) **Gurtaufroller mit Kraftbegrenzer**
Seat belt retractor and force limiter
Rétracteur de ceinture de sécurité et limiteur de force

(30) Priorität: 27.05.1999 DE 29909252 U
(43) Veröffentlichungstag der Anmeldung: 29.11.2000
(73) Patentinhaber: TRW Automotive GmbH, 73553 Alfdorf (DE)
(72) Erfinder: Weller, Hermann-Karl, 73553 Alfdorf (DE)
(74) Vertreter: Sties, Jochen

(56) Entgegenhaltungen:
- EP-A- 0 709 266
- EP-A- 1 044 856
- WO-A-97/33778
- DE-A- 4 227 781
- DE-A- 19 820 641
- DE-U- 29 708 493
- US-A- 5 887 814

## Beschreibung

Die Erfindung betrifft eine Baugruppe aus einem Gurtaufroller für einen Fahrzeugsicherheitsgurt und einem Kraftbegrenzer, wobei der Gurtaufroller eine Gurtspule aufweist und der Kraftbegrenzer ein Gehäuse und ein mit der Gurtspule koppelbares Antriebsteil.

Eine solche Baugruppe ist aus dem deutschen Gebrauchsmuster 298 16 280 bekannt. Der Kraftbegrenzer dient dazu, eine Drehung der Gurtspule des Gurtaufrollers in der Gurtband-Abwickelrichtung entgegen einem vorbestimmten Drehmoment zu ermöglichen, so daß Gurtband von der Gurtspule abgezogen werden kann, das als zusätzlicher Weg zur Verzögerung eines Fahrzeuginsassen zur Verfügung steht. Auf diese Weise können Kraftspitzen im Fahrzeugsicherheitsgurt abgebaut werden, so daß das Verletzungsrisiko für einen zurückzuhaltenden Fahrzeuginsassen gesenkt wird.

Allgemein besteht bei Gurtaufrollern, die mit einem Kraftbegrenzer versehen sind, das Problem, daß nach einem Primäraufprall, bei dem die Kraftbegrenzungsfunktion wirksam wurde, es unerwünscht ist, daß weiteres Gurtband von der Gurtspule abgezogen werden kann. Würde weiteres Gurtband von der Gurtspule abgezogen werden können, könnte der Fahrzeuginsasse bei einem auf den Primäraufprall folgenden Sekundäraufprall sich weiter nach vorne verlagern. Eine solche weitere Vorverlagerung könnte beispielsweise dazu führen, daß der Fahrzeuginsasse mit beispielsweise einem Fahrzeuglenkrad oder einem Teil des Armaturenbretts in Berührung kommt, da die heute üblicherweise verwendeten Gassäcke, nachdem sie bei einem Primäraufprall wirksam wurden, keine ausreichende Rückhaltewirkung für einen Sekundäraufprall bereitstellen.

Somit besteht die Aufgabe der Erfindung darin, eine Baugruppe der eingangs genannten Art dahingehend weiterzuentwickeln, daß nach einem Primäraufprall die Gurtspule zuverlässig blockiert wird, so daß kein weiteres Gurtband von dieser abgezogen werden kann.

Diese Aufgabe wird bei einer Baugruppe der eingangs genannten Art dadurch gelöst, daß eine mit dem Antriebsteil verbundene Blockierklinke, ein Auslösemechanismus für die Blockierklinke sowie eine feststehende Blockierverzahnung vorgesehen sind, in welche die Blockierklinke durch den Auslösemechanismus eingesteuert werden kann, wobei der Auslösemechanismus durch eine Relativdrehung zwischen dem Antriebsteil und dem Gehäuse des Kraftbegrenzers aktiviert werden und gegen Ende der Relativdrehung die Blockierklinke in die Blockierverzahnung einsteuern kann, so daß die Gurtspule gegen eine Drehung in der Gurtband-Abzugsrichtung relativ zur Blockierverzahnung blockiert ist. Der Vorgang der Kraftbegrenzung, also das Abziehen von Gurtband von der Gurtspule entgegen einem Widerstandsdrehmoment, ist bei der erfindungsgemäßen Baugruppe im wesentlichen unverändert gegenüber dem Stand der Technik. Der Auslösemechanismus wird zwar durch den Beginn der Kraftbegrenzungsfunktion aktiviert; die Blockierklinke verbleibt jedoch bis zum Abschluß der Kraftbegrenzungsfunktion in ihrer Stellung, in der sie nicht in die Blockierverzahnung eingreift. Erst mit Beendigung der Kraftbegrenzungsfunktion, also wenn das Antriebsteil relativ zum Gehäuse des Kraftbegrenzers zur Ruhe gekommen ist, wird die Blockierklinke in die Blockierverzahnung eingesteuert, so daß kein weiterer Abzug des Gurtbandes von der Gurtspule möglich ist. Somit ist gewährleistet, daß auch bei einem Sekundäraufprall eine Rückhaltewirkung für den Fahrzeuginsassen bereitgestellt werden kann wobei dann aber keine Kraftbegrenzungsfunktion mehr wirksam ist. Das Abschalten der Kraftbegrenzungsfunktion gewährleistet also nicht nur, daß bei einem Sekundärcrash nur eine geringe Vorverlagerung des Fahrzeuginsassen möglich ist; zusätzlich ergeben sich Vorteile bei der Auslegung des Gurtaufrollers und insbesondere des Kraftbegrenzers. Der Kraftbegrenzer muß nur so ausgelegt werden, daß er bei einem Primäraufprall das Abziehen der erforderlichen Länge von Gurtband ermöglicht (rund 300 mm Gurtband). Da bei einem Sekundäraufprall die Gurtspule direkt verriegelt wird und keine Kraftbegrenzungsfunktion mehr wirksam ist, braucht der Kraftbegrenzer nicht so ausgelegt sein, daß er auch in diesem Fall noch einen Gurtbandabzug ermöglicht.

Gemäß einer bevorzugten Ausführungsform ist vorgesehen, daß die Blockierverzahnung an dem Gehäuse des Kraftbegrenzers angebracht ist. Dies ergibt eine besonders kompakte Gestaltung.

Gemäß der bevorzugten Ausführungsform ist weiterhin vorgesehen, daß an der Gurtspule eine Sperrklinke angebracht ist, die in eine am Antriebsteil angebrachte Sperrverzahnung eingesteuert werden kann, so daß die Gurtspule mit dem Antriebsteil gekoppelt ist. Diese Gestaltung ermöglicht es in besonders einfacher Weise, einen herkömmlichen Gurtaufroller, wie er beispielsweise in dem deutschen Gebrauchsmuster 298 12 435 beschrieben ist, in Verbindung mit einem Kraftbegrenzer zu verwenden, wie er aus dem eingangs genannten Gebrauchsmuster bekannt ist. Die Sperrklinke, die üblicherweise dazu dient, die Gurtspule durch Eingriff in eine rahmenfeste Verzahnung zu blockieren, dient nun dazu, die Gurtspule mit dem Kraftbegrenzer zu koppeln. Wenn die Sperrklinke nicht aktiviert ist, kann sich die Gurtspule frei drehen. Dies entspricht dem üblichen Betrieb. Wenn dagegen die Sperrung der Gurtspule aktiviert wird, beispielsweise weil die Beschleunigung oder Verzögerung des Fahrzeugs einen bestimmten Schwellenwert überschreitet oder die auf die Gurtspule einwirkende, von hohen Gurtbandkräften hervorgerufene Drehbeschleunigung einen bestimmten Schwellenwert überschreitet, wird die Gurtspule über die Sperrklinke mit dem Kraftbegrenzer verbunden. Da der Kraftbegrenzer erst bei Überschreiten eines vorbestimmten Drehmomentes aktiv wird und eine Drehung des Antriebsteils relativ zum Gehäuse ermöglicht, wirkt die am Antriebsteil angebrachte Sperrverzahnung wie eine gehäusefeste Verzahnung, solange das auf das Antriebsteil aufgebrachte Drehmoment unterhalb des Wertes bleibt, ab dem der Kraftbegrenzer aktiv ist. Wenn in diesem Zustand das auf die Gurtspule einwirkende Drehmoment wieder absinkt, wird die Sperrklinke wieder von der Sperrverzahnung gelöst, und die Gurtspule kann sich frei drehen. Wenn dagegen das einwirkende Drehmoment die Schwelle überschreitet, ab der der Kraftbegrenzer aktiv ist, kommt es zu einer Relativdrehung zwischen dem Antriebsteil des Kraftbegrenzers und dessen Gehäuse, so daß das Abspulen von Gurtband von der Gurtspule entgegen dem vom Kraftbegrenzer bereitgestellten Widerstandsdrehmoment möglich ist.

Gemäß einer bevorzugten Ausführungsform der Erfindung ist vorgesehen, daß der Auslösemechanismus an dem Antriebsteil angebracht ist. Auf diese Weise kann unmittelbar die zur Aktivierung des Auslösemechanismus genutzte Relativdrehung zwischen dem Antriebsteil und dem Gehäuse erfaßt werden.

Vorzugsweise ist weiterhin vorgesehen, daß die Blockierklinke an dem Antriebsteil gelagert ist. Dies gibt eine besonders kompakte Gestaltung und eine direkte Kraftübertragung ohne Umwege.

Gemäß einer ersten Ausführungsform enthält der Auslösemechanismus einen Käfig, der relativ zum Antriebsteil aus einer Ausgangsstellung, in der die Blockierklinke nicht in die Blockierverzahnung eingreift, in eine aktivierte Stellung verdrehbar ist, in der die Blockierklinke in die Blockierverzahnung eingesteuert ist. Auf diese Weise ergibt sich eine besonders kompakte Gestaltung, insbesondere, wenn der Auslösemechanismus eine Feder enthält, welche den Käfig aus der Ausgangsstellung in die aktivierte Stellung beaufschlagt, und wenn die Blockierklinke an dem Antriebsteil gelagert ist. Weiterhin kann vorgesehen sein, daß die Blockierklinke mit einer Nase versehen ist, die mit einer an dem Antriebsteil ausgebildeten Rampe zusammenwirkt, so daß die Blockierklinke bei einer Drehung des Käfigs aus der Ausgangsstellung in die Ruhestellung in die Blockierverzahnung eingesteuert wird.

Gemäß der ersten Ausführungsform ist weiterhin ein Haltestift vorgesehen, der den Auslösemechanismus in der Ausgangsstellung halten kann und in eine Aufnahme im Gehäuse des Kraftbegrenzers eingreift, so daß er bei einer Relativdrehung zwischen dem Antriebsteil und dem Gehäuse des Kraftbegrenzers abgeschert wird, wodurch der Auslösemechanismus aktiviert wird. Diese Gestaltung ermöglicht es auf besonders einfache Weise, eine auftretende Relativdrehung zwischen dem Antriebsteil und dem Gehäuse zur Aktivierung des Auslösemechanismus zu nutzen.

Gemäß einer zweiten Ausführungsform ist die Blockierklinke an einem Schieber angebracht, dessen Masse und Geometrie so gewählt sind, daß der Gesamtmassenschwerpunkt von Blockierklinke und Schieber auf der von der Blockierklinke abgewandten Seite der Drehachse des Antriebsteils liegt. Abweichend von der ersten Ausführungsform, bei der der Auslösemechanismus im wesentlichen in Abhängigkeit von den Beschleunigungswerten anspricht, wird bei dieser Gestaltung die Blockierklinke in Abhängigkeit von der Drehgeschwindigkeit betätigt. Wenn die Drehgeschwindigkeit so hoch ist, daß die vom Gesamtmassenschwerpunkt erzeugte Zentrifugalkraft größer ist als die Wirkung der Feder, die die Blockierklinke in die Blockierverzahnung einzusteuern sucht, wird die Blockierklinke von der Blockierverzahnung entfernt gehalten. Sobald die Drehgeschwindigkeit unter einen bestimmten Wert absinkt, übersteigt die von der Feder ausgeübte Kraft die Zentrifugalkraft, so daß die Blockierklinke in die Sperrverzahnung eingesteuert wird.

Vorzugsweise ist weiterhin ein Haltestift vorgesehen, der an dem Gehäuse angebracht und elastisch ist, wobei an der Blockierklinke eine Nase angebracht ist, an der der Haltestift anliegen und die Blockierklinke entgegen der von der Feder ausgeübten Kraft in der nicht in die Blockierverzahnung eingesteuerten Stellung halten kann. Der Haltestift kann also elastisch nachgeben, so daß er bei einer Relativdrehung zwischen dem Antriebsteil und dem Gehäuse nicht hinderlich ist. Vorzugsweise ist am Gehäuse eine Schräge vorgesehen, die sich an die Nase der Blockierklinke anschließt und den Haltestift, wenn das Antriebsteil relativ zum Gehäuse verdreht wird, nach außen ableitet. Da der Haltestift nicht mehr abgeschert wird, stellt er kein loses Teil dar, das nach Aktivierung der Kraftbegrenzungsfunktion im Inneren des Gehäuses störend wirken könnte.

Bei der zweiten Ausführungsform kann weiterhin vorgesehen sein, daß an dem Gehäuse eine Haltefläche und an der Blockierklinke ein Vorsprung ausgebildet sind, wobei der Vorsprung hinter die Haltefläche greift, wenn sich die Blockierklinke in ihrer nicht in die Blockierverzahnung eingesteuerten Stellung befindet. Die Haltefläche zusammen mit dem Vorsprung wirkt in derselben Richtung wie der an der Nase angreifende Haltestift, also entgegen der Wirkung der Feder. Auf diese Weise wird die Wirkung der Feder in einer Phase der Relativdrehung zwischen dem Antriebsteil und dem Gehäuse kompensiert, in der die Drehgeschwindigkeit des Antriebsteils noch vergleichsweise gering ist, so daß die von dem Gesamtmassenschwerpunkt erzeugte Zentrifugalkraft ebenfalls vergleichsweise gering ist.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer Explosionsansicht eine erfindungsgemäße Baugruppe gemäß einer ersten Ausführungsform;
- Figur 2 die erfindungsgemäße Baugruppe von Figur 1 in einer weiteren Explosionsansicht;
- Figur 3 in einer perspektivischen Ansicht das bei der erfindungsgemäßen Baugruppe gemäß der ersten Ausführungsform verwendete Antriebsteil zusammen mit dem Auslösemechanismus in einer ersten Stellung;
- Figur 4 das Antriebsteil zusammen mit dem Auslösemechanismus von Figur 3 in einer zweiten Stellung;
- Figur 5 in einer perspektivischen Ansicht das bei einer erfindungsgemäßen Baugruppe gemäß einer zweiten Ausführungsform verwendete Antriebsteil zusammen mit dem Auslösemechanismus in einer ersten Stellung;
- Figur 6 in einer perspektivischen Ansicht das Antriebsteil zusammen mit dem Auslösemechanismus von Figur 5 in einer zweiten Stellung; und
- Figur 7 in einer perspektivischen Ansicht das das Antriebsteil von Figur 5 umgebende Gehäuse.

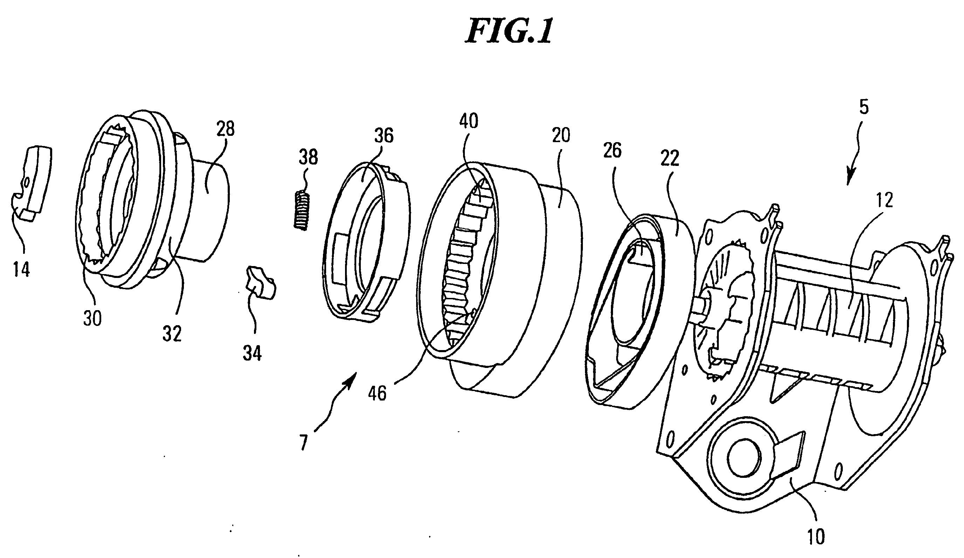

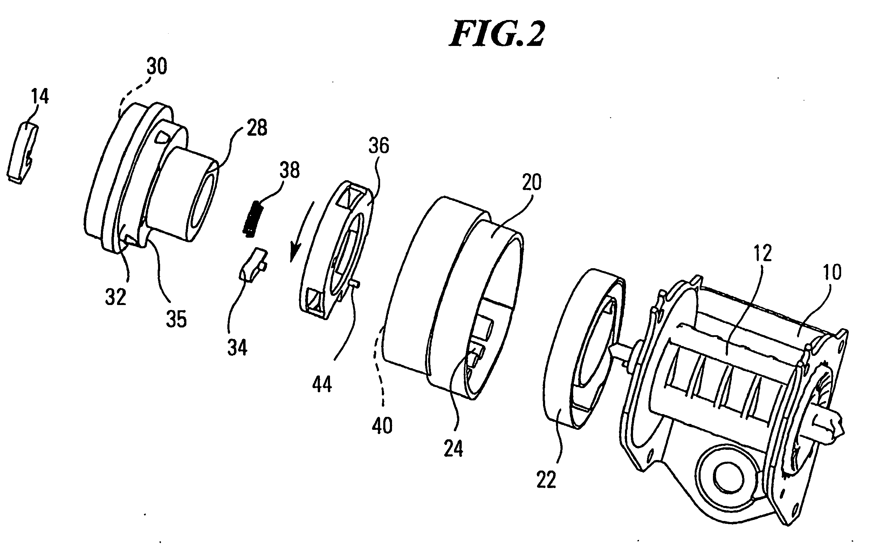

In den Figuren 1 und 2 ist eine erfindungsgemäße Baugruppe gemäß einer ersten Ausführungsform gezeigt. Diese besteht aus einem Gurtaufroller 5 sowie einem Kraftbegrenzer 7.

Der Gurtaufroller 5 weist einen Rahmen 10 auf, in welchen drehbar eine Gurtspule 12 gelagert ist. Die Gurtspule dient in bekannter Weise zur Aufnahme eines Fahrzeugsicherheitsgurtes. Zur besseren Übersichtlichkeit sind die weiteren, herkömmlichen Funktionsteile des Gurtaufrollers, beispielsweise Aufwickelfeder, Sperrmechanismus, etc., in den Zeichnungen größtenteils nicht dargestellt. Gezeigt ist lediglich eine Sperrklinke 14, die indirekt an der Gurtspule 12 gelagert ist. Zu diesem Zweck ist ein (in den Zeichnungen nicht dargestelltes) Übergangsstück vorgesehen, an dem die Sperrklinke 14 schwenkbar gelagert ist. Mit der Sperrklinke 14 wirkt ein herkömmlicher Sperrmechnismus zusammen, der die Sperrklinke in gurtbandsensitiver oder in fahrzeugsensitiver Weise aktivieren kann, um die Gurtspule zu blockieren. Dies wird später weiter erläutert.

Der Kraftbegrenzer 7 weist ein Gehäuse 20 auf, das fest am Rahmen 10 des Gurtaufrollers angebracht ist. In diesem Gehäuse 20 ist eine Führungsbahn für ein Metallband 22 gebildet, die mehrere Schikanen 24 aufweist. Das Metallband 22 ist im Ausgangszustand in der Führungsbahn angeordnet und mit seinem inneren Ende 26 in ein Antriebsteil 28 eingehängt. Das Antriebsteil 28 ist im Gehäuse 20 aufgenommen. Eine Relativdrehung zwischen dem Antriebsteil 28 und dem Gehäuse 20 ist nur möglich, wenn dabei das Metallband 22 aus der Führungsbahn herausgezogen und auf das Antriebsteil 28 aufgewickelt wird. Hinsichtlich einer detaillierten Beschreibung des Aufbaus und der Wirkungsweise eines solchen Kraftbegrenzers wird auf das eingangs genannte Gebrauchsmuster verwiesen.

An dem Antriebsteil 28 ist eine Sperrverzahnung 30 ausgebildet, die der mit der Gurtspule 12 verbundenen Sperrklinke 14 zugeordnet ist. Die Sperrklinke 14 zusammen mit der Sperrverzahnung 30 hat die Funktion, im Normalbetrieb die freie Drehbarkeit der Gurtspule 12 relativ zum Antriebsteil 28 des Kraftbegrenzers zu ermöglichen und dann, wenn die Gurtspule in fahrzeugsensitiver oder gurtbandsensitiver Weise gesperrt werden soll, eine Kopplung der Gurtspule mit dem Antriebsteil 28 des Kraftbegrenzers zu gewährleisten. Sobald die Sperrklinke 14 von dem zugehörigen Sperrmechanismus in die Sperrverzahnung 30 eingesteuert ist, kann die Gurtspule nicht weiter in der Gurtband-Abzugsrichtung gedreht werden, solange das einwirkende Drehmoment unterhalb der Schwelle liegt, bei der der Kraftbegrenzer aktiv wird. Unterhalb dieser Schwelle ist nämlich die Gurtspule über die Sperrklinke 14, die Sperrverzahnung 30, das am Antriebsteil 28 eingehängte Metallband 22 und das Gehäuse 20 des Kraftbegrenzers am Rahmen 10 des Gurtaufrollers abgestützt. Wenn dagegen das einwirkende Drehmoment das maximal zulässige Haltedrehmoment zwischen dem Gehäuse 20 und dem Antriebsteil 28 des Kraftbegrenzers überschreitet, kommt es zu einer Relativdrehung zwischen diesen beiden Teilen, so daß entgegen dem dann bereitgestellten Widerstandsdrehmoment Gurtband von der Gurtspule 12 abgezogen werden kann.

Nachfolgend wird beschrieben, wie erfindungsgemäß gegen Ende eines Kraftbegrenzungsvorganges die Gurtspule 12 relativ zum Rahmen 10 blockiert werden kann, so daß kein weiterer Gurtbandabzug möglich ist.

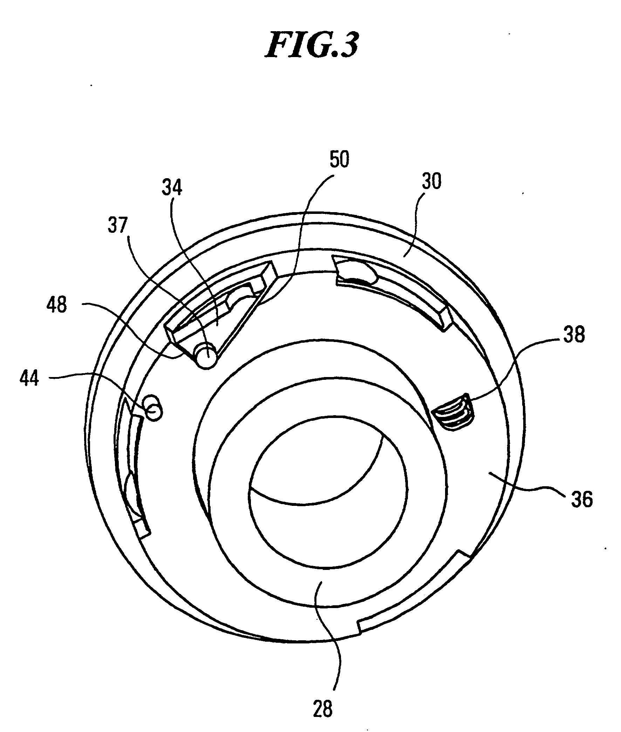

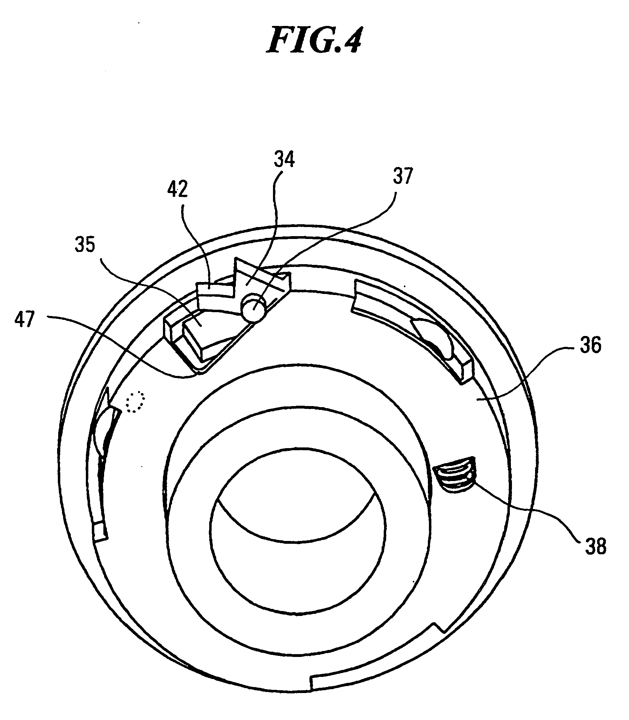

Zwischen dem mit dem Metallband 22 verbundenen Abschnitt des Antriebsteils 28 und der Sperrverzahnung 30 ist ein Halteabschnitt 32 für eine Blockierklinke 34 vorgesehen. Die Blockierklinke 34 ist an dem Halteabschnitt 32 in einer Aufnahme 35 (siehe die Figuren 2 und 4) schwenkbar gelagert. Auf dem Halteabschnitt 32 ist drehbar ein Käfig 36 (siehe auch die Figuren 3 und 4) angebracht, der zwischen einer Ausgangsstellung und einer aktivierten Stellung relativ zum Halteabschnitt 32 verdreht werden kann. Auf den Käfig 36 wirkt eine Druckfeder 38 ein, die diesen aus der Ausgangsstellung in die aktivierte Stellung beaufschlagt.

An der Blockierklinke 34 ist eine Nase 37 ausgebildet, die in ein Fenster 47 hineinragt, das am Käfig 36 ausgebildet ist. Das Fenster weist insbesondere einen radial verlaufenden Rand 48 sowie einen schräg vom tiefsten Punkt des Fensters zum Außenumfang des Käfigs 36 verlaufenden Rand 50 auf.

Am Gehäuse 20 des Kraftbegrenzers ist eine Blockierverzahnung 40 fest angebracht, mit der die Blockierklinke 34 zusammenwirken kann. Dies ist nachfolgend erläutert.

Wenn sich der Käfig 36 in seiner Ausgangsstellung befindet, wird die Blockierklinke 34 in einer an den Halteabschnitt 32 angelegten Stellung gehalten, in der sie nicht in die Blockierverzahnung 40 eingesteuert ist. Insbesondere ist an der Blockierklinke 34 ein Absatz 42 vorgesehen, der unter dem Käfig 36 liegt und auf diese Weise die Blockierklinke 34 in ihrer an den Halteabschnitt 32 angelegten Stellung in der Aufnahme 35 hält.

Der Käfig 36 wird in seiner in Figur 3 gezeigten Ausgangsstellung entgegen der Wirkung der Druckfeder 38 mittels eines Haltestiftes 44 gehalten, der in eine zugehörige Aufnahme 46 im Gehäuse des Kraftbegrenzers eingreift. Da das Antriebsteil 28 vom Metallband 22 unterhalb eines vorbestimmten Drehmomentes drehfest relativ zum Gehäuse 20 gehalten wird, kann sich der Haltestift 44, der an dem drehbar auf dem Halteabschnitt 32 gelagerten Käfig 36 angebracht ist, so am Gehäuse abstützen, daß der Käfig 36 in seiner Ausgangsstellung gehalten wird.

Sobald es aufgrund des von der Gurtspule 12 auf das Antriebsteil 28 ausgeübten Drehmomentes zu einer Relativdrehung zwischen dem Antriebsteil 28 und dem Gehäuse 20 kommt, wird der Haltestift 44 des Käfigs 36 abgeschert. Somit wird der Käfig 36 nicht mehr am Gehäuse 20 abgestützt, und er ist nur noch der Beaufschlagung durch die Druckfeder 38 ausgesetzt. Dennoch ist die Feder 38 zunächst nicht in der Lage, den Käfig 36 relativ zum Halteabschnitt 32 zu verdrehen. Dies ist auf die während des Kraftbegrenzungsvorgangs wirkende Drehbeschleunigung der Gurtspule und des Antriebsteils 28 zusammen mit dem Halteabschnitt 32 und der Sperrverzahnung 30 zurückzuführen. Die Kraftbegrenzungsfunktion wird dadurch wirksam, daß im Fahrzeugsicherheitsgurt extrem hohe Zugkräfte wirken. Diese führen dazu, daß die Gurtspule 12 in der Gurtband-Abwickelrichtung einer hohen Drehbeschleunigung ausgesetzt wird. Diese Drehbeschleunigung wirkt in derselben Richtung wie die Kraft, die von der Druckfeder 38 auf den Käfig 36 ausgeübt wird, ist jedoch von ihrer Wirkung her stärker als die Wirkung der Druckfeder 38. Somit nimmt der Halteabschnitt 32 über die in der Aufnahme 35 aufgenommene Blockierklinke 34 und die Nase 37, die an dem radialen Rand 48 des Fensters 47 anliegt, den Käfig 36 mit.

Erst wenn die auf das Antriebsteil 28 einwirkende Drehbeschleunigung absinkt, was gegen Ende der Kraftbegrenzungsfunktion der Fall ist, ist die Druckfeder 38 in der Lage, den Käfig 36 relativ zum Halteabschnitt 32 zu verdrehen. Bei dieser Verdrehung wird die Sperrklinke 34 durch Zusammenwirken des schrägen Randes 50 des Fensters 47 mit der Nase 37 aus ihrer an den Halteabschnitt 32 angelegten Stellung in eine in die Blockierverzahnung 40 eingesteuerte Stellung verschwenkt. Diese Stellung ist in Figur 4 gezeigt. In dieser Stellung der Blockierklinke 34 ist eine Drehung der Gurtspule 12 in der Gurtband-Abwickelrichtung nicht möglich, da die Gurtspule über die Sperrklinke 14, die Sperrverzahnung 30, den Halteabschnitt 32, die Blockierklinke 34, die Blockierverzahnung 40 und das Gehäuse 20 des Kraftbegrenzers relativ zum Rahmen 10 festgehalten wird.

Auf diese Weise ist gewährleistet, daß automatisch am Ende eines Kraftbegrenzungsvorganges eine Blockierung der Gurtspule relativ zum Rahmen erfolgt, so daß beispielsweise bei einem Sekundäraufprall kein Gurtband mehr von der Gurtspule abgezogen werden kann.

Obwohl die erfindungsgemäße Baugruppe in Verbindung mit einem Kraftbegrenzer beschrieben ist, der ein Metallband verwendet, das durch eine Schikane hindurchgezogen wird, kann selbstverständlich auch ein Kraftbegrenzer verwendet werden, bei dem beispielsweise ein Torsionsstab zur Kraftbegrenzung verwendet wird. Auch bei einem solchen Kraftbegrenzer ist ein Antriebsteil vorhanden (beispielsweise im Bereich der Verbindung des Torsionsstabes mit der Gurtspule), das beim Kraftbegrenzungsvorgang einer solchen Beschleunigung ausgesetzt wird, daß eine Relativdrehung des auf ihm angeordneten Käfigs erst dann möglich ist, wenn der Kraftbegrenzungsvorgang im wesentlichen abgeschlossen ist.

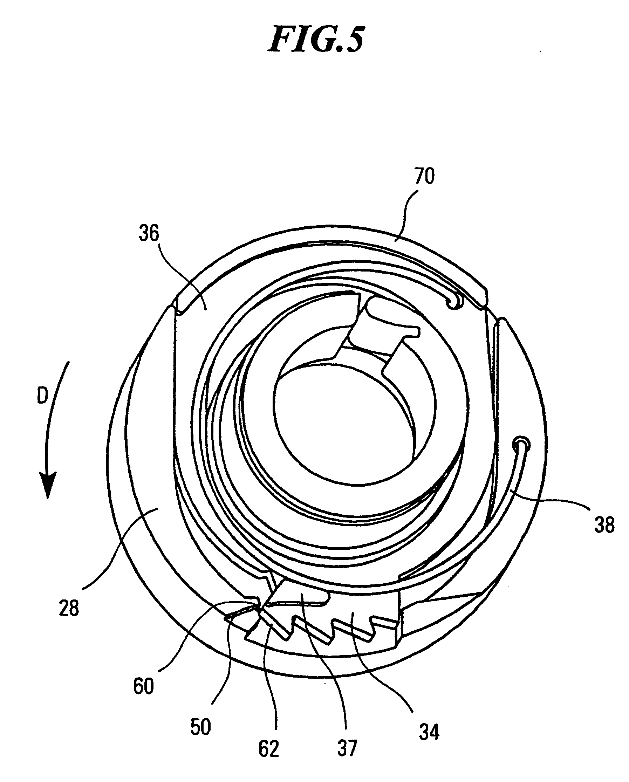

In den Figuren 5 bis 7 sind das Antriebsteil und das Gehäuse für eine Baugruppe gemäß einer zweiten Ausführungsform der Erfindung dargestellt. Für Bauelemente, die ihrer Funktion oder ihrem Aufbau nach von der ersten Ausführungsform bekannt sind, werden hier dieselben Bezugszeichen verwendet.

Im Unterschied zur ersten Ausführungsform ist hier die Blockierklinke 34 nicht schwenkbar am Antriebsteil 28 gelagert, sondern in radialer Richtung translatorisch verschiebbar. Zu diesem Zweck ist mit der Blockierklinke 34 ein Schieber 36 verbunden, der die mittige Nabe des Antriebsteils 28 umgreift und auf der bezüglich der Drehachse des Antriebsteils zur Blockierklinke 34 entgegengesetzten Seite mit einem Gegengewicht 70 versehen ist. Aufgrund des Gegengewichtes 70 und der Ausgestaltung des Schiebers 36 befindet sich der Gesamtmassenschwerpunkt der von der Blockierklinke 34, dem Schieber 36 und dem Gegengewicht 70 gebildeten Einheit bezüglich der Drehachse auf der zur Blockierklinke entgegengesetzten Seite, also auf der Seite des Gegengewichtes 70.

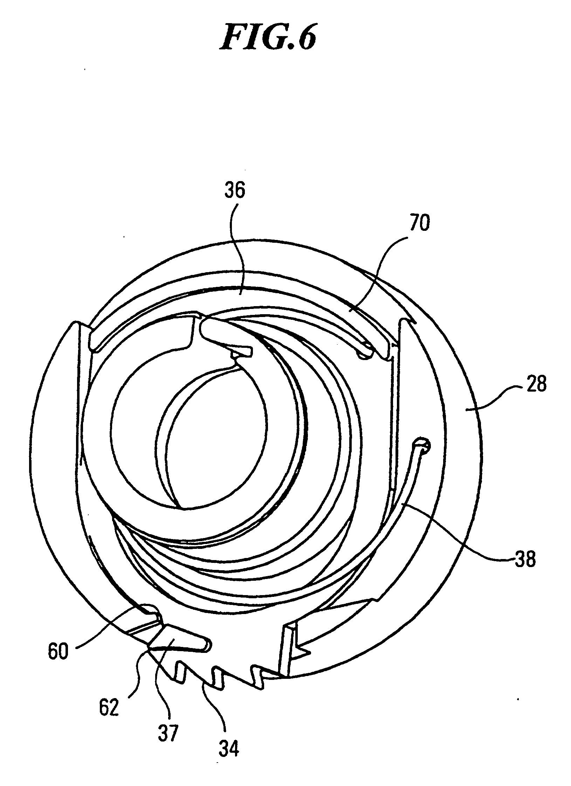

Es ist eine Schenkelfeder 38 vorgesehen, die mit einem Ende am Antriebsteil 28 und mit dem anderen Ende am Schieber 36 eingehängt ist. Die Schenkelfeder beaufschlagt den Schieber 36 und somit auch die Blockierklinke 34 aus der in Figur 5 gezeigten Stellung, in der die Blockierklinke 34 nicht in die Blockierverzahnung 40 eingreift, bezüglich Figur 5 nach unten in die in Figur 6 gezeigte Stellung, in der die Blockierklinke 34 in die Blockierverzahnung 40 eingreift.

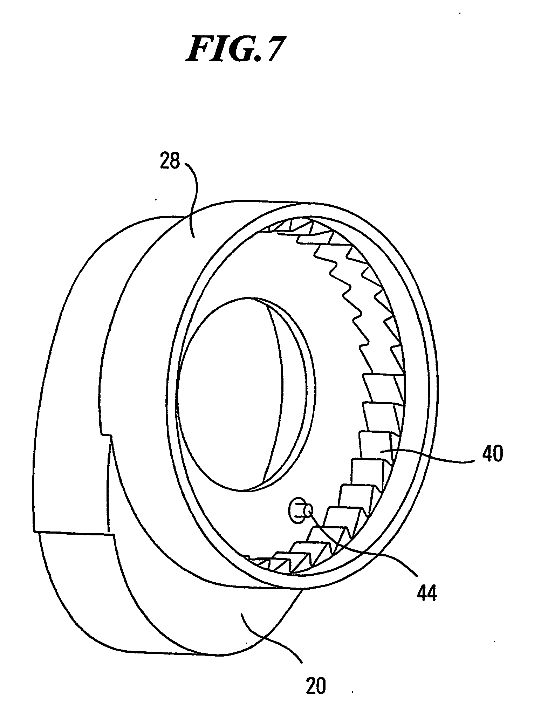

An der Blockierklinke 34 ist eine Nase 37 vorgesehen, die an dem Haltestift 44 (siehe Figur 7) anliegt. Der Haltestift wirkt somit der von der Feder 38 ausgeübten Beaufschlagung des Schiebers 36 entgegen. Ferner ist an dem Antriebsteil eine Haltefläche 60 ausgebildet, die mit einem an der Blockierklinke 34 ausgebildeten Vorsprung 62 so zusammenwirkt, daß sie einer Verschiebung der Blockierklinke 34 in radialer Richtung nach außen entgegenwirkt. Die Haltefläche 60 und der Vorsprung 62 zusammen sind allein nicht in der Lage, die Blockierklinke 34 entgegen der Wirkung der Feder 38 in der in Figur 5 gezeigten Stellung zu halten.

Wenn auf das Antriebsteil 28 ein solches Drehmoment ausgeübt wird, daß es zu einer Drehung des Antriebsteils 28 in der Richtung des Pfeils D relativ zum Gehäuse 20 kommt, wird der Haltestift 44, der elastisch ausgebildet ist, von der Nase 37 der Blockierklinke 34 radial nach außen geschoben. Dies wird bei einer weiteren Relativdrehung unterstützt von einer Schräge 50, die am Antriebsteil 28 ausgebildet ist und sich an die Nase 37 anschließt. Durch die Nase 37 und die Schräge 50 wird der Haltestift 44 so weit nach außen gebogen, daß er in dieser Stellung verbleibt.

Sobald der Haltestift 44 nicht mehr an der Nase 37 anliegt, kann der Haltestift keinerlei Kraft mehr bereitstellen, die der von der Feder 38 ausgeübten Kraft entgegenwirkt. Allerdings ist dieser Zustand erst dann erreicht, wenn bereits eine gewisse Drehgeschwindigkeit des Antriebsteils erzielt ist, so daß die dann auf den Gesamtmassenschwerpunkt wirkende Zentrifugalkraft zusammen mit der von der Haltefläche 60 und dem Vorsprung 62 bereitgestellten Haltekraft der von der Feder 38 ausgeübten Kraft entgegenwirkt, so daß die Blockierklinke 34 in ihrer in Figur 5 gezeigten Stellung verbleibt. Erst wenn die Drehgeschwindigkeit des Antriebsteils absinkt und dadurch auch die auf den Gesamtmassenschwerpunkt einwirkende Zentrifugalkraft absinkt, ist die Feder 38 in der Lage, die Blockierklinke 34 radial nach außen hinein in die Blockierverzahnung zu bewegen. Nunmehr ist die Kraftbegrenzungsfunktion ausgeschaltet, und die Gurtspule 12 ist direkt blockiert.

## Patentansprüche

1. Baugruppe bestehend aus einem Gurtaufroller (5) für einen Fahrzeugsicherheitsgurt und einem Kraftbegrenzer (7), wobei der Gurtaufroller eine Gurtspule (12) aufweist und der Kraftbegrenzer ein Gehäuse (20) und ein mit der Gurtspule (12) koppelbares Antriebsteil (28) aufweist,
**dadurch gekennzeichnet, daß** eine mit dem Antriebsteil (28) verbundene Blockierklinke (34), ein Auslösemechanismus (36, 38, 44) für die Blockierklinke (34) sowie eine feststehende Blockierverzahnung (40) vorgesehen sind, in welche die Blockierklinke (34) durch den Auslösemechanismus (36, 38, 44) eingesteuert werden kann, wobei der Auslösemechanismus (36, 38, 44) durch eine Relativdrehung zwischen dem Antriebsteil (28) und dem Gehäuse (20) des Kraftbegrenzers (7) aktiviert werden und gegen Ende der Relativdrehung die Blockierklinke (34) in die Blockierverzahnung (40) einsteuern kann, so daß die Gurtspule (12) gegen eine Drehung in der Gurtband-Abzugsrichtung relativ zur Blockierverzahnung (40) blockiert ist.

2. Baugruppe nach Anspruch 1, **dadurch gekennzeichnet, daß** die Blockierverzahnung (40) an dem Gehäuse (20) des Kraftbegrenzers (7) angebracht ist.

3. Baugruppe nach einem der Ansprüche 1 und 2, **dadurch gekennzeichnet, daß** an der Gurtspule (12) eine Sperrklinke (14) angebracht ist, die in eine am Antriebsteil (28) angebrachte Sperrverzahnung (30) eingesteuert werden kann, so daß die Gurtspule (12) mit dem Antriebsteil (28) gekoppelt ist.

4. Baugruppe nach einem der vorhergehenden Ansprüche, **dadurch gekennzeichnet, daß** der Auslösemechanismus (36, 38, 44) an dem Antriebsteil (28) angebracht ist.

5. Baugruppe nach einem der vorhergehenden Ansprüche, **dadurch gekennzeichnet, daß** die Blockierklinke (34) an dem Antriebsteil (28) gelagert ist.

6. Baugruppe nach Anspruch 5, **dadurch gekennzeichnet, daß** der Auslösemechanismus eine Feder (38) enthält, die so vorgespannt ist, daß sie die Blockierklinke (34) in die Blockierverzahnung (40) beaufschlagt.

7. Baugruppe nach Anspruch 6, **dadurch gekennzeichnet, daß** der Auslösemechanismus einen Käfig (36) enthält, der relativ zum Antriebsteil (28) aus einer Ausgangsstellung, in der die Blockierklinke (34) nicht in die Blockierverzahnung (40) eingreift, in eine aktivierte Stellung verdrehbar ist, in der die Blockierklinke (34) in die Blockierverzahnung (40) eingesteuert ist.

8. Baugruppe nach Anspruch 7, **dadurch gekennzeichnet, daß** ein Haltestift (44) vorgesehen ist, der den Käfig (36) in der Ausgangsstellung halten kann und in eine Aufnahme (46) im Gehäuse des Kraftbegrenzers (7) eingreift, so daß er bei einer Relativdrehung zwischen dem Antriebsteil (28) und dem Gehäuse (20) des Kraftbegrenzers abgeschert wird, wodurch der Auslösemechanismus (36, 38, 44) aktiviert wird.

9. Baugruppe nach Anspruch 8, **dadurch gekennzeichnet, daß** an der Blockierlinke (34) eine Nase (37) vorgesehen ist, die mit einer an dem Antriebsteil (28) ausgebildeten Rampe (50) zusammenwirkt, so daß die Blockierklinke (34) bei einer Drehung des Käfigs (36) aus der Ausgangsstellung in die aktivierte Stellung in die Blockierverzahnung (40) eingesteuert wird.

10. Baugruppe nach Anspruch 6, **dadurch gekennzeichnet, daß** die Blockierklinke (34) an einem Schieber (36) angebracht ist, dessen Masse und Geometrie so gewählt sind, daß der Gesamtmassenschwerpunkt von Blockierklinke (34) und Schiebe (36) auf der von der Blockierklinke (34) abgewandten Seite der Drehachse des Antriebstells (28) liegt.

11. Baugruppe nach Anspruch 10, **dadurch gekennzeichnet, daß** ein Haltestift (44) vorgesehen ist, der an dem Gehäuse (20) des Kraftbegrenzers (7) angebracht und elastisch ist, wobei an der Blockierklinke (34) eine Nase (37) angebracht ist, an der der Haltestift (44) anliegen und die Blockierklinke (34) entgegen der von der Feder (38) ausgeübten Kraft in der nicht in die Blockierverzahnung (40) eingesteuerten Stellung halten kann.

12. Baugruppe nach Anspruch 10, **dadurch gekennzeichnet, daß** am Antriebsteil (28) eine Schräge (50) vorgesehen ist, die sich an einer Nase (37) der Blockierklinke (34) anschließt und den Haltestift (44), wenn das Antriebsteil relativ zum Gehäuse verdreht wird, nach außen ableitet.

13. Baugruppe nach einem der Ansprüche 11 und 12, **dadurch gekennzeichnet, daß** an dem Antriebsteil (28) eine Haltefläche (60) und an der Blockierklinke (34) ein Vorsprung (62) ausgebildet sind, wobei der Vorsprung hinter die Haltefläche (60) greift, wenn sich die Blockierklinke (34) in ihrer nicht in die Blockierverzahnung (40) eingesteuerten Stellung befindet.

14. Baugruppe nach einem der vorhergehenden Ansprüche, **dadurch gekennzeichnet, daß** der Kraftbegrenzer ein Metallband (22) enthält, das mit dem Antriebsteil (28) verbunden ist und bei einer Relativdrehung zwischen dem Antriebsteil (28) und dem Gehäuse (20) durch eine Schikane (24) hindurchgezogen werden kann.

## Claims

1. An assembly comprised of a belt retractor (5) for a vehicle safety belt and of a force limiter (7), the belt retractor having a belt spool (12) and the force limiter having a housing (20) and a driving part (28) that can be coupled with the belt spool (12),
**characterised in that** a blocking catch (34) connected with the driving part (28), a release mechanism (36, 38, 44) for the blocking catch (34) and a stationary blocking toothing (40) are provided, into which the blocking catch (34) can be caused to engage by the release mechanism (36, 38, 44), the release mechanism (36, 38, 44) being able to be activated by a relative rotation between the driving part (28) and the housing (20) of the force limiter (7) and, towards the end of the relative rotation, can cause the blocking catch (34) to engage into the blocking toothing (40), so that the belt spool (12) is locked against a rotation relative to the blocking toothing (40) in the belt webbing withdrawal direction.

2. The assembly according to Claim 1, **characterised in that** the blocking toothing (40) is arranged on the housing (20) of the force limiter (7).

3. The assembly according to either of Claims 1 and 2, **characterised in that** on the belt spool (12) a locking catch (14) is arranged, which can be caused to engage into a locking toothing (30) arranged on the driving part (28), so that the belt spool (12) is coupled with the driving part (28).

4. The assembly according to any of the preceding claims, **characterised in that** the release mechanism (36, 38, 44) is arranged on the driving part (28).

5. The assembly according to any of the preceding claims, **characterised in that** the blocking catch (34) is mounted on the driving part (28).

6. The assembly according to Claim 5, **characterised in that** the release mechanism includes a spring (38) which is prestressed such that it biases the blocking catch (34) into the blocking toothing (40).

7. The assembly according to Claim 6, **characterised in that** the release mechanism includes a cage (36) which is rotatable relative to the driving part (28) from an initial position, in which the blocking catch (34) does not engage into the blocking toothing (40), into an activated position, in which the blocking catch (34) is engaged into the blocking toothing (40).

8. The assembly according to Claim 7, **characterised in that** a holding pin (44) is provided, which can hold the cage (36) in the initial position and engages into a mounting (46) in the housing of the force limiter (7), so that it is sheared off upon a relative rotation between the driving part (28) and the housing (20) of the force limiter, whereby the release mechanism (36, 38, 44) is activated.

9. The assembly according to Claim 8, **characterised in that** the blocking catch (34) is provided with a nose (37) which co-operates with a slope (50) formed on the driving part (28), so that upon a rotation of the cage (36) from the initial position into the activated position, the blocking catch (34) is caused to engage into the blocking toothing (40).

10. The assembly according to Claim 6, **characterised in that** the blocking catch (34) is arranged on a slider (36) the mass and geometry of which are selected such that the overall centre of mass of the blocking catch (34) and the slider (36) lies on the side of the rotation axis of the driving part (28) facing away from the blocking catch (34).

11. The assembly according to Claim 10, **characterised in that** a holding pin (44) is provided which is arranged on the housing (20) of the force limiter (7) and is elastic, the blocking catch (34) having a nose (37) arranged thereon against which the holding pin (44) can lie and can hold the blocking catch (34), contrary to the force exerted by the spring (38), in the position not engaged into the blocking toothing (40).

12. The assembly according to Claim 10, **characterised in that** the driving part (28) is provided with a slope (50) which adjoins a nose (37) of the blocking catch (34) and deflects the holding pin (44) outwards when the driving part is rotated relative to the housing.

13. The assembly according to either of Claims 11 and 12, **characterised in that** a holding surface (60) is formed on the driving part (28) and a projection (62) is formed on the blocking catch (34), the projection engaging behind the holding surface (60) when the blocking catch (34) is in its position not engaged into the blocking toothing (40).

14. The assembly according to any of the preceding claims, **characterised in that** the force limiter includes a metal band (22) which is connected with the driving part (28) and upon a relative rotation between the driving part (28) and the housing (20) can be drawn through a guideway (24).

## Revendications

1. Ensemble constitué par un enrouleur de ceinture (5) pour une ceinture de sécurité de véhicule et par un limiteur de force (7), l'enrouleur de ceinture présentant une bobine de ceinture (12), et le limiteur de force présentant un boîtier (20) et une pièce d'entraînement (28) qui peut être couplée à la bobine de ceinture (12),
**caractérisé en ce qu'**il est prévu un cliquet de blocage (34) relié à la pièce d'entraînement (28), un mécanisme de déclenchement (36, 38, 44) pour le cliquet d'entraînement (28), ainsi qu'une denture de blocage (40) fixe dans laquelle le cliquet de blocage (34) peut être amené en engagement par le mécanisme de déclenchement (36, 38, 44), le mécanisme de déclenchement (36, 38, 44) pouvant être activé par une rotation relative entre la pièce d'entraînement (28) et le boîtier (20) du limiteur de force (7) et amené en engagement dans la denture de blocage (40) vers la fin de la rotation relative, de sorte que la bobine de ceinture (12) est bloquée contre une rotation par rapport à la denture de blocage (40) dans la direction de retrait de la sangle de ceinture.

2. Ensemble selon la revendication 1, **caractérisé en ce que** la denture de blocage (40) est montée sur le boîtier (20) du limiteur de force (7).

3. Ensemble selon l'une des revendications 1 et 2, **caractérisé en ce que** sur la bobine de ceinture (12) est monté un cliquet d'arrêt (14) qui peut être mené à s'engager dans une denture d'arrêt (30) prévue sur la pièce d'entraînement (28), de sorte que la bobine de ceinture (12) est couplée à la pièce d'entraînement (28).

4. Ensemble selon l'une des revendications précédentes, **caractérisé en ce que** le mécanisme de déclenchement (36, 38, 44) est monté sur la pièce d'entraînement (28).

5. Ensemble selon l'une des revendications précédentes, **caractérisé en ce que** le cliquet de blocage (34) est logé sur la pièce d'entraînement (28).

6. Ensemble selon la revendication 5, **caractérisé en ce que** le mécanisme de déclenchement contient un ressort (38) qui est précontraint de telle sorte qu'il sollicite le cliquet de blocage (34) jusque dans la denture de blocage (40).

7. Ensemble selon la revendication 6, **caractérisé en ce que** le mécanisme de déclenchement contient une cage (36) qui est rotative par rapport à la pièce d'entraînement (28) depuis une position initiale dans laquelle le cliquet de blocage (34) ne s'engage pas dans la denture de blocage (40) jusque dans une position active dans laquelle le cliquet de blocage (34) est amené à s'engager dans la denture de blocage (40).

8. Ensemble selon la revendication 7, **caractérisé en ce qu'**il est prévu une goupille de retenue (44) qui peut maintenir la cage (36) dans la position initiale et qui s'engage dans un logement (46) dans le boîtier du limiteur de force (7) de sorte qu'en cas d'une rotation relative entre la pièce d'entraînement (28) et le boîtier (20) du limiteur de force, elle est cisaillée, grâce à quoi le mécanisme de déclenchement (36, 38, 44) est activé.

9. Ensemble selon la revendication 8, **caractérisé en ce que** sur le cliquet de blocage (34) est prévu un ergot (47) qui coopère avec une rampe (50) réalisée sur la pièce d'entraînement (28), de telle sorte qu'en cas d'une rotation de la cage (36) depuis la position initiale jusque dans la position active, le cliquet de blocage (34) est amené à s'engager dans la denture de blocage (40).

10. Ensemble selon la revendication 6, **caractérisé en ce que** le cliquet de blocage (34) est monté sur un coulisseau (36) dont la masse et la géométrie sont choisies telles que le centre de gravité global du cliquet de blocage (34) et du coulisseau (36) est situé sur la face détournée du cliquet de blocage (34), de l'axe de rotation de la pièce d'entraînement (28).

11. Ensemble selon la revendication 10, **caractérisé en ce qu'**il est prévu une goupille de retenue (44) qui est montée sur le boîtier (20) du limiteur de force (7) et qui est élastique, un ergot (37) étant monté sur le cliquet de blocage (34), ergot sur lequel la goupille de retenue (44) peut prendre appui et retenir le cliquet de blocage (34) à l'encontre de la force exercée par le ressort (38) dans la position qui n'est pas amenée en engagement dans la denture de blocage (40).

12. Ensemble selon la revendication 10, **caractérisé en ce que** sur la pièce d'entraînement (28) est prévu un chanfrein (50) qui se raccorde à un ergot (37) du cliquet de blocage (34) et qui dévie la goupille de retenue (44) vers l'extérieur lorsque la pièce d'entraînement est tournée par rapport au boîtier.

13. Ensemble selon l'une des revendications 11 et 12, **caractérisé en ce que** sur la pièce d'entraînement (28) est réalisée une surface de retenue (60) et sur le cliquet de blocage (34) est réalisée une saillie (62), la saillie s'engageant derrière la surface de retenue (60) lorsque le cliquet de blocage (34) se trouve dans sa position non amenée en engagement.

14. Ensemble selon l'une des revendications précédentes, **caractérisé en ce que** le limiteur de force contient une bande métallique (22) qui est reliée à la pièce d'entraînement (28) et qui peut être passée à travers une chicane (24) entre la pièce d'entraînement (28 et le boîtier (20).
